(19) **Europäisches Patentamt / European Patent Office / Office européen des brevets**

(11) **EP 4 382 558 A1**

(12) **EUROPEAN PATENT APPLICATION**
published in accordance with Art. 153(4) EPC

(43) Date of publication:
**12.06.2024 Bulletin 2024/24**

(21) Application number: **22852828.7**

(22) Date of filing: **19.07.2022**

(51) International Patent Classification (IPC):
*C08J 5/18* (2006.01)   *B32B 27/00* (2006.01)
*B32B 27/30* (2006.01)

(52) Cooperative Patent Classification (CPC):
**B32B 27/00; B32B 27/30; C08J 5/18**

(86) International application number:
**PCT/JP2022/028095**

(87) International publication number:
**WO 2023/013404 (09.02.2023 Gazette 2023/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.08.2021 JP 2021130097**
**05.04.2022 JP 2022063103**

(71) Applicant: **Denka Company Limited**
**Tokyo 103-8338 (JP)**

(72) Inventors:
• **YASUMOTO, Noriaki**
**Tokyo 103-8338 (JP)**
• **MIYAMURA, Yasushi**
**Tokyo 103-8338 (JP)**
• **TAKANO, Keiji**
**Tokyo 103-8338 (JP)**

(74) Representative: **Mewburn Ellis LLP**
**Aurora Building**
**Counterslip**
**Bristol BS1 6BX (GB)**

(54) **FILM HAVING METHACRYLIC ACID ESTER-BASED RESIN AS MAIN COMPONENT THEREOF**

(57) A resin film that has both high transparency and excellent blocking resistance is provided. A film, including crosslinked (meth)acrylic acid ester-based resin particles and including methacrylic acid ester-based resin as a main component, wherein the crosslinked (meth)acrylic acid-based resin particles have an average particle diameter of 1% or more and 10% or less with respect to an average thickness of the film, wherein the film does not comprise vinylidene fluoride-based resin, wherein a haze of the film measured based on JIS K7136: 2000 is 5% or less, and wherein a clarity (CLR) of the film is 97% or more.

FIG. 1

**EP 4 382 558 A1**

**Description**

**FIELD OF THE INVENTION**

The present invention relates to a single layer film or a multilayer film comprising a film containing a methacrylic acid ester-based resin as a main component. In particular, the present invention relates to a single layer film or a multilayer film that can be applied as the outermost layer of a metallic decorative film.

**BACKGROUND OF THE INVENTION**

Conventionally, resin films containing vinylidene fluoride-based resins have excellent weather resistance and chemical resistance, so they have been suitably used as the outermost layer (generally referred to as a "protective layer") of decorative films used for the interior or exterior of automobiles, electrical appliance parts, and the like. Decorative films are generally manufactured through a process of bonding a decorative layer to the film of the outermost layer. Common methods for bonding include lamination using an adhesive and thermal lamination.

In recent years, designs have become more diversified and complex, especially for automobile interiors, and the outermost layer of decorative films is required to have high transparency so as not to impair color and texture. Particularly, among decorative films, a metallic decorative film produced by performing metal vapor deposition on a resin film for the purpose of imparting a metallic design is required to have an outermost layer with high transparency. For this reason, techniques have been developed to improve the transparency of resin films containing vinylidene fluoride-based resins.

In order to provide a film with high crystallinity, transparency, and surface smoothness, Patent Literature 1 (WO 2011/142453) proposes a film comprising a vinylidene fluoride-based resin (A) and an acrylic resin (B), wherein an arithmetic mean roughness of at least one surface is 0.1 to 20 nm, a heat of crystal fusion measured by differential scanning calorimeter is 18 to 40 J/g, and a haze value is 3.5 or less.

Patent Literature 2 (Japanese Patent Application Publication No. 2012-187934) describes a new fluororesin film that can be used for vehicle interior and exterior parts and has excellent transparency, surface hardness, chemical resistance, and stain resistance was successfully produced by using a fluorine-based (meth)acrylic resin comprising a fluorine-containing alkyl (meth)acrylate component. Further, this literature specifically discloses a fluororesin laminated acrylic resin film in which a fluororesin film layer is laminated on at least one side of a film layer of acrylic resin (A), wherein the fluororesin film layer is formed by molding a fluororesin (C) comprising a fluorine-based (meth)acrylic resin (B) containing a fluorine-containing alkyl (meth)acrylate polymer component.

**PRIOR ART**

Patent Literature

[Patent Literature 1] WO 2011/142453

[Patent Literature 2] Japanese Patent Application Publication No. 2012-187934

**SUMMARY OF THE INVENTION**

As described above, techniques for improving the transparency and the like of a resin film used as the outermost layer of a decorative film are known. However, since the resin film is often provided as a film roll wound up into a roll, there is a problem in that the films tend to stick to each other (blocking) during storage. When the resin film is fed out from the film roll, if the resin films are peeled off from each other, the surface of the resin film becomes rough. Therefore, considering the application to decorative films that require an excellent appearance, especially metallic decorative films (for example, metallic decorative films with a metallic mirror-like appearance), conventional resin films still have room for improvement.

The present invention has been created in view of the above circumstances, and in one embodiment, an object of the present invention is to provide a resin film that has both high transparency and excellent blocking resistance.

As a result of intensive research in order to solve the above problem, the present inventors have found it is effective to add crosslinked (meth)acrylic acid ester-based resin particles of a predetermined size to a film that contains methacrylic acid ester-based resin as a main component and does not contain vinylidene fluoride-based resin. The present invention has been achieved accordingly, and is exemplified as below.

[1] A film, comprising crosslinked (meth)acrylic acid ester-based resin particles and comprising methacrylic acid ester-based resin as a main component,

wherein the crosslinked (meth)acrylic acid-based resin particles have an average particle diameter of 1% or more and 10% or less with respect to an average thickness of the film,
wherein the film does not comprise vinylidene fluoride-based resin,
wherein a haze of the film measured based on JIS K7136: 2000 is 5% or less, and
wherein a clarity (CLR) of the film calculated from the following formula is 97% or more,

$$CLR = 100 \times (Ic - Ir) / (Ic + Ir)$$

in which, Ic represents an amount of light that travels straight with respect to an optical axis of parallel light that is perpendicular to a surface of the film, out of the light that passes through the film, and Ir represents an amount of narrow-angle scattered light whose angle with respect to the optical axis of parallel light is within $\pm 2.5°$.

[2] The film according to [1], wherein an amount of the crosslinked (meth)acrylic acid ester-based resin particles is 0.1 parts by mass or more and 2 parts by mass or less with respect to 100 parts by mass of the methacrylic acid ester-based resin.

[3] A multilayer film, comprising:

the film according to [1] or [2], and

a film comprising vinylidene fluoride-based resin laminated on one side of the film;

wherein a haze measured based on JIS K7136: 2000 is 5% or less, a clarity (CLR) is 97% or more, and a 60° specular gloss measured based on JIS Z8741: 1997 of an outer surface side of the film comprising vinylidene fluoride-based resin is 100 or more.

[4] The multilayer film according to [3], wherein the film comprising the vinylidene fluoride-based resin comprises:

(A) one or two selected from a copolymer of vinylidene fluoride with hexafluoropropylene, and polyvinylidene fluoride, and

(B) a methacrylic acid ester-based resin;

wherein a total of (A) is 50 parts by mass or more and 80 parts by mass or less, and (B) is 20 parts by mass or more and 50 parts by mass or less, with respect to 100 parts by mass of a total of (A) and (B).

[5] A metallic decorative film, in which the film according to [1] or [2] is laminated as an outermost layer, or a metallic decorative film, in which the multilayer film according to [3] or [4] is laminated as an outermost layer with the film containing vinylidene fluoride-based resin on an outside.

According to one embodiment of the present invention, a single layer film or a multilayer film having both high transparency and excellent blocking resistance can be obtained. The single-layer film or multilayer film can be used by being attached to a base material, and can be suitably used, for example, as the outermost layer of a decorative film, especially a metallic decorative film.

**BRIEF DESCRIPTION OF THE DRAWINGS**

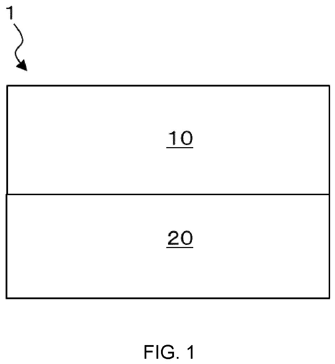

FIG. 1 is a schematic cross-sectional view showing a laminated structure of a film according to a second embodiment of the present invention.

**DETAILED DESCRIPTION OF THE INVENTION**

Hereinafter, embodiments of the present invention will now be described. The embodiments described below are illustrative examples of typical embodiments of the present invention, and are not intended to narrow the technical scope of the present invention.

(1. First embodiment)

The film according to the first embodiment can be composed of a resin composition comprising crosslinked (meth)acrylic acid ester-based resin particles, and comprising methacrylic acid ester-based resin as the main component.

In this specification, methacrylic acid ester-based resin refers to a homopolymer of methacrylic acid ester such as methyl methacrylate, and a copolymer of methacrylic acid ester with a monomer that is copolymerizable with the methacrylic acid ester, whose particle diameter in the film is less than 0.2 $\mu$m (including particles so fine that the particle diameter cannot be specified and particles forming a matrix phase). In other words, resin particles having a particle diameter of 0.2 $\mu$m or more in the film are not included in the methacrylic acid ester-based resin in this specification. When the film is pinched and fixed in a small metal vise, and cut with a single-edged knife such that the cross-section of the film is smooth, and the cross-section of the film is observed at a magnification of 2000x using a confocal laser microscope (for example, VK-X1 10 manufactured by Keyence Corporation) with the film pinched in the vise, the particle diameter of a resin particle refers to the diameter of the smallest circle that can surround the resin particle.

Monomers that is copolymerizable with methacrylic acid ester include: (meth)acrylic acid esters such as butyl acrylate, butyl methacrylate, ethyl acrylate, and ethyl methacrylate; aromatic vinyl monomers such as styrene, $\alpha$-methylstyrene, p-methylstyrene, o-methylstyrene, t-butylstyrene, divinylbenzene, tristyrene; vinyl cyanide monomers such as acrylonitrile and methacrylonitrile; glycidyl group-containing monomers such as glycidyl (meth)acrylate; vinyl carboxylate-based monomers such as vinyl acetate and vinyl butyrate; olefin-based monomers such as ethylene, propylene, isobutylene; diene-based monomers such as 1,3-butadiene and isoprene; unsaturated carboxylic acid-based monomers such as maleic acid, maleic anhydride, (meth)acrylic acid; enone-based monomers such as vinyl methyl ketone; and the like. These can be used alone or in combination of two or more. Among these, from the viewpoint of film strength and flexibility, a homopolymer of methyl methacrylate, or an acrylic rubber-modified methacrylic copolymer obtained by copolymerizing an acrylic rubber containing butyl (meth)acrylate with a monomer mainly composed of methyl methacrylate is preferred.

Examples of copolymers include random copolymers, graft copolymers, block copolymers (for example, diblock copolymers, triblock copolymers, linear types such as gradient copolymers, star-shaped copolymers polymerized by the arm-first method or core-first method, and the like), and copolymers obtained by polymerization using macromonomers, which are polymeric compounds with polymerizable functional groups (macromonomer copolymers), and mixtures thereof. Among these, graft copolymers and block copolymers are preferred from the viewpoint of resin productivity.

Examples of the polymerization reaction for obtaining the methacrylic acid ester-based resin include known polymerization reactions such as radical polymerization, living radical polymerization, living anionic polymerization, and living cationic polymerization. Further, examples of the polymerization method include known polymerization methods such as bulk polymerization, suspension polymerization, emulsion polymerization, and solution polymerization. The mechanical properties of the resulting resin vary depending on the polymerization reaction and polymerization method.

The fact that the film according to the first embodiment comprises a methacrylic acid ester-based resin as the main component means that the methacrylic acid ester-based resin is the component with the largest mass proportion among the constituent components of the film. The formulation amount of the methacrylic acid ester-based resin in the film is preferably 50% by mass or more, more preferably 70% by mass or more, even more preferably 90% by mass or more, and even more preferably 95% by mass or more. For example, it can be 50 to 99% by mass.

The film according to the first embodiment contains crosslinked (meth)acrylic acid-based resin particles in addition to the methacrylic acid ester-based resin. In a typical embodiment, the crosslinked (meth)acrylic acid ester-based resin particles are present in a dispersed state in a matrix of methacrylic acid ester-based resin. Crosslinked (meth)acrylic acid ester-based resin particles have a refractive index similar to that of the methacrylic acid ester-based resin that is the main component, so even if they are dispersed in the methacrylic acid ester-based resin, they have the characteristic that it does not easily impair the transparency of the film.

In this specification, crosslinked (meth)acrylic acid ester-based resin particles refer to those having a particle diameter of 0.2 $\mu$m or more in the film. The particle diameter of the resin particles refers to the diameter of the smallest circle that can surround the resin particles when the film is observed by the method described above. Therefore, even if there is a particulate crosslinked (meth)acrylic acid ester-based resin, if its particle diameter in the film is less than 0.2 $\mu$m, it belongs to the methacrylic acid ester-based resin as long as it satisfies the above definition regarding the methacrylic acid ester-based resin.

The crosslinked (meth)acrylic acid-based resin particles in the film preferably have an average particle diameter of 1% or more and 10% or less with respect to the average thickness of the film. The crosslinked (meth)acrylic acid ester-based resin particles preferably have an average particle diameter of 1% or more, more preferably 2% or more, and even more preferably 3% or more with respect to the average thickness of the film, thereby imparting appropriate unevenness to the film surface and improving blocking resistance. In addition, the crosslinked (meth)acrylic acid ester-based resin particles preferably have an average particle diameter of 10% or less, more preferably 9% or less, even more preferably 8% or less, even more preferably 7% or less, and even more preferably 6% or less, with respect to the average thickness of the film, so that the clarity of the film can be improved without excessively increasing unevenness on the film surface.

As mentioned above, it is desirable that the suitable range of the average particle diameter of the crosslinked (meth)acrylic acid ester-based resin particles be determined in relation to the average thickness of the film. For this reason, the average particle diameter of the crosslinked (meth)acrylic acid ester-based resin particles itself is not so important, but considering the normally assumed thickness of the film, the average particle diameter of the crosslinked (meth)acrylic acid ester-based resin particles is preferably 0.5 to 5 $\mu$m, more preferably 0.5 to 2 $\mu$m. In this specification, the average particle diameter of crosslinked (meth)acrylic acid ester-based resin particles refers to the D50 value (volume basis) of the particle diameter distribution measured by a laser diffraction / scattering method.

The average thickness of the film according to the first embodiment is preferably 10 to 100 $\mu$m, more preferably 15 to 90 $\mu$m, even more preferably 20 to 85 $\mu$m, and particularly preferably 25 to 80 $\mu$m. When the average thickness of the film is 10 $\mu$m or more, film formability is improved and the protective function when used as the outermost layer of a multilayer film can be improved, and by setting the thickness to 100 $\mu$m or less, improved transparency and processability can be achieved. The film according to the first embodiment may be formed in a single layer or in multiple layers, but it is desirable that the total average thickness falls within the above-mentioned average thickness. The average thickness of the film can be calculated as the average value obtained by measuring the thickness at multiple locations by observing the cross-section of the film using a confocal laser microscope.

Examples of crosslinked (meth)acrylic acid ester-based resin particles include, but are not limited to, crosslinked polymethyl acrylate, crosslinked polyethyl acrylate, crosslinked polymethyl methacrylate, crosslinked polyethyl methacrylate, crosslinked polynormal butyl methacrylate, and the like. These can be used alone or in combination of two or more. Among these, it is preferable to contain crosslinked polymethyl methacrylate because the difference in refractive index with the methacrylic acid ester-based resin constituting the matrix is small. Even when heat is applied during film production, the crosslinked (meth)acrylic acid ester-based resin particles tend to be maintained without being compatible with the methacrylic acid ester-based resin constituting the matrix due to the crosslinked structure.

In the film according to the first embodiment, regarding the formulation amount of the crosslinked (meth)acrylic acid ester-based resin particles, a smaller amount can improve transparency, while a larger amount can improve blocking resistance. Therefore, from the viewpoint of achieving both transparency and blocking resistance, the formulation amount of the crosslinked (meth)acrylic acid ester-based resin particles is preferably 0.1 parts by mass or more and 2 parts by mass or less, more preferably 0.3 parts by mass or more and 1.5 parts by mass or less, and even more preferably 0.5 parts by mass or more and 1 part by mass or less, with respect to 100 parts by mass of the methacrylic acid ester-based resin.

The lower limit of the glass transition point (Tg) of the methacrylic acid ester-based resin is preferably 70 °C or higher, more preferably 80 °C or higher. The upper limit of Tg of the methacrylic acid ester-based resin is preferably 120 °C or lower.

The Tg of the methacrylic acid ester-based resin can be measured by heat flux differential scanning calorimetry (heat flux DSC). For example, using a differential scanning calorimeter DSC3100SA manufactured by Bruker AXS, it can be determined from the DSC curve (first run) obtained when a sample mass of 1.5 mg is heated from room temperature to 200 °C at a heating rate of 10 °C/min.

From the viewpoint of increasing transparency, the haze of the film according to the first embodiment measured based on JIS K7136: 2000 is preferably 5% or less, more preferably 4% or less, and for example, it can be in the range of 1 to 5%.

In one embodiment, the film according to the first embodiment has a clarity (CLR) calculated from the following formula of 97% or more, preferably 98% or more, more preferably 99% or more, and for example, it can be 97 to 99.5%.

$$CLR = 100 \times (Ic - Ir) / (Ic + Ir)$$

In which, Ic represents the amount of light that travels straight with respect to the optical axis of parallel light that is incident perpendicularly to the surface of the film, out of the light that passes through the film, and Ir represents an amount of narrow-angle scattered light whose angle with respect to the optical axis of parallel light is within $\pm 2.5°$. In the measurement, a CIE-D65 light source is used as a light source.

Clarity is a parameter similar to haze, but good haze does not necessarily mean good clarity (CLR). Haze is a parameter that evaluates the optical properties of a film perceived by an observer using wide-angle scattered light (transmitted light that is deviated by 2.5° or more from the incident light due to forward scattering). On the other hand, clarity is a parameter that evaluates the optical properties of a film perceived by an observer using narrow-angle scattered light. For this reason, it can be said that haze evaluates the degree of turbidity of a film, whereas clarity evaluates the degree of sharpness of the outline of an article when it is visually recognized through a film. In other words, high clarity as well as haze means that when a film is used by being attached to the surface of an article, the design expressed on the surface of the article can be viewed faithfully. For example, when the article is a base material of a metallic decorative film, the metallic luster on the surface of the base material can be clearly seen even after the film is attached.

From the viewpoint of increasing transparency, the total light transmittance of the film according to the first embodiment measured based on JIS K7361-1: 1997 is preferably 80% or more, more preferably 85% or more, even more preferably 90% or more, and for example, it can be 80 to 95%.

In addition to the methacrylic acid ester-based resin and the crosslinked (meth)acrylic acid ester-based resin particles, the film according to the first embodiment can appropriately comprise ultraviolet absorbers, other resins, plasticizers, heat stabilizers, antioxidants, light stabilizers, crystal nucleating agents, anti-blocking agents, sealability improvers, mold release agents, colorants, pigments, foaming agents, flame retardants, and the like, within a range that does not impair the object of the present invention. However, in general, the total amount of the methacrylic acid ester-based resin and the crosslinked (meth)acrylic acid-based resin particles in the film according to the first embodiment is 90% by mass or more, typically 95% by mass or more, more typically 97% by mass or more, and can even be 100% by mass. Further, from the viewpoint of improving transparency, especially clarity, it is desirable that the film according to the first embodiment does not contain vinylidene fluoride-based resin.

The film according to the first embodiment preferably comprises an ultraviolet absorber. When the resin composition comprises an ultraviolet absorber, ultraviolet rays are blocked and weather resistance can be effectively improved. Examples of ultraviolet absorbers include, but are not limited to, hydroquinone, triazine, benzotriazole, benzophenone, cyanoacrylate, oxalic acid, hindered amine, salicylic acid derivatives, and the like. These can be used alone or in combination of two or more. Among these, it is preferable to contain a triazine compound, a benzotriazole compound, or a mixture thereof, from the viewpoint of sustainability of the ultraviolet blocking effect.

The formulation amount of the ultraviolet absorber in the film according to the first embodiment is preferably 0.1 to 10 parts by mass, with respect to 100 parts by mass of the methacrylic acid ester-based resin. By setting the formulation amount of the ultraviolet absorber in the resin composition to 0.1 parts by mass or more, preferably 1 part by mass or more, and more preferably 2 parts by mass or more, with respect to 100 parts by mass of the methacrylic acid ester-based resin, it is possible to expect an effect of improving weather resistance as well as an effect of absorbing ultraviolet rays. In addition, by setting the formulation amount of the ultraviolet absorber in the resin composition to 10 parts by mass or less, preferably 5 parts by mass or less, with respect to 100 parts by mass of the methacrylic acid ester-based resin, it is possible to prevent the ultraviolet absorber from bleeding out onto the film surface and realize cost reduction.

The film according to the first embodiment can be manufactured by, for example, performing the following steps.

Step 1: a step in which a resin composition containing a methacrylic acid ester-based resin and 0.1 parts by mass or more and 2 parts by mass or less of crosslinked (meth)acrylic acid ester-based resin particles with respect to 100 parts by mass of the methacrylic acid ester-based resin is melt extrusion molded into a film with an average thickness of 10 to 100 $\mu$m using a T-die at a temperature of 200 to 260 °C.

Step 2: after extrusion from the exit of the T-die, a step of cooling at least one surface of the melt extrusion molded film by bringing it into contact with the surface of a metal roll whose temperature is controlled to 30 to 60 °C.

When producing a film with a thickness of about 30 to 50 $\mu$m under the above conditions, it is appropriate to set the film transport speed to 3 to 7 m/min. Further, from the viewpoint of removing foreign matter, when a screen mesh is installed in the extruder, the opening of the mesh needs to be adjusted to a size that allows the crosslinked (meth)acrylic acid ester-based resin particles to pass through.

Examples of methods for controlling the temperature on the surface of the metal roll include a method of circulating a cooling medium such as cooling water inside the metal roll.

Examples of the melt extrusion molding method include a T-die method for forming a film using a T-die, and a method using an inflation die. During cooling, it is more preferred that a rubber touch roll is placed opposite the metal roll, and the molten resin composition extruded from the exit of the die is pinched between the metal roll (cast roll) and the touch roll, from the viewpoint of transferring the smooth surface of the metal roll to the film. The surface temperature of the rubber touch roll is preferably 0 to 70 °C, more preferably 0 to 30 °C, from the viewpoint of suppressing transfer of the surface shape of the rubber roll.

From the viewpoint of reducing the surface roughness of the film, it is desirable that the surface roughness of the metal roll is small, and it is further desirable that the surface roughness of the touch roll is also small. Reducing the surface roughness of the film is advantageous in reducing the haze value and increasing the clarity of the film. This is because the surface roughness of the metal roll and touch roll is reflected in the surface roughness of the film. Therefore, the arithmetic mean roughness Ra on the surface of the metal roll measured based on JIS B0601: 2001 is preferably 100 nm or less, more preferably 80 nm or less, even more preferably 60 nm or less, even more preferably 40 nm or less, even more preferably 20 nm or less, and for example, it can be 10 to 100 nm. The arithmetic mean roughness Ra on the surface of the touch roll measured based on JIS B0601: 2001 is preferably 150 nm or less, more preferably 120 nm or less, and for example, it can be set to 100 to 150 nm.

(2. Second embodiment)

FIG. 1 shows a schematic cross-sectional view showing the laminated structure of a film 1 according to the second embodiment. The film 1 has a laminated structure including at least a surface layer 10 and a back layer 20 laminated on the surface layer 10 in this order. Typically, the surface layer 10 and the back layer 20 are directly bonded to each other without any other resin layer interposed between them.

In one embodiment, the surface layer is composed of a film comprising vinylidene fluoride-based resin. The film constituting the surface layer preferably comprises a vinylidene fluoride-based resin and a methacrylic acid ester-based resin.

The mixing ratio of vinylidene fluoride-based resin and methacrylic acid ester-based resin in the film constituting the surface layer is preferably vinylidene fluoride-based resin : methacrylic acid ester-based resin = 50 to 80 parts by mass : 20 to 50 parts by mass, more preferably 60 to 75 parts by mass : 25 to 40 parts by mass, for a total of 100 parts by mass of both. When the vinylidene fluoride-based resin is 50 parts by mass or more with respect to a total of 100 parts by mass of the vinylidene fluoride-based resin and the methacrylic acid ester-based resin, properties such as chemical resistance, weather resistance, and stain resistance can be improved. Furthermore, by containing a small amount of methacrylic acid ester-based resin in the film constituting the surface layer, adhesiveness and adhesion with the back layer can be improved.

In this specification, the vinylidene fluoride-based resin refers to a homopolymer of vinylidene fluoride, as well as a copolymer of vinylidene fluoride with a monomer that is copolymerizable with vinylidene fluoride. Examples of monomers that is copolymerizable with vinylidene fluoride include vinyl fluoride, tetrafluoroethylene, hexafluoropropylene, hexafluoroisobutylene, chlorotrifluoroethylene, various fluorinated alkyl vinyl ethers, as well as known vinyl monomers such as styrene, ethylene, butadiene, and propylene, and the like. These can be used alone or in combination of two or more. Among these, at least one selected from vinyl fluoride, tetrafluoroethylene, hexafluoropropylene, and chlorotrifluoroethylene is preferred, and hexafluoropropylene is more preferred.

Therefore, the film constituting the surface layer preferably comprises (A) one or two selected from a copolymer of vinylidene fluoride with hexafluoropropylene, and polyvinylidene fluoride (PVDF homopolymer), and (B) a methacrylic acid ester-based resin; wherein with respect to 100 parts by mass of the total of (A) and (B), the total of (A) is 50 parts by mass or more and 80 parts by mass or less, (B) is 20 parts by mass or more and 50 parts by mass or less, and more preferably the total of (A) is 60 parts by mass or more and 75 parts by mass or less, (B) is 25 parts by mass or more and 40 parts by mass or less.

Examples of the polymerization reaction for obtaining the vinylidene fluoride-based resin include known polymerization reactions such as radical polymerization and anionic polymerization. Further, examples of the polymerization method include known polymerization methods such as suspension polymerization and emulsion polymerization. The mechanical properties of the resulting resin vary depending on the polymerization reaction and/or polymerization method.

The lower limit of the melting point of the vinylidene fluoride-based resin is preferably 150 °C or higher, more preferably 160 °C or higher. The upper limit of the melting point of the vinylidene fluoride-based resin is preferably 170 °C or lower, which is equal to the melting point of polyvinylidene fluoride (PVDF).

The lower limit of the glass transition point (Tg) of the methacrylic acid ester-based resin is preferably 70 °C or higher, more preferably 80 °C or higher. The upper limit of Tg of the methacrylic acid ester-based resin is preferably 120 °C or lower.

The melting point of the vinylidene fluoride-based resin and the Tg of the methacrylic acid ester-based resin can be measured by heat flux differential scanning calorimetry (heat flux DSC). For example, using a differential scanning calorimeter DSC3100SA manufactured by Bruker AXS, it can be determined from the DSC curve (first run) obtained when a sample mass of 1.5 mg is heated from room temperature to 200 °C at a heating rate of 10 °C/min.

In addition to the vinylidene fluoride-based resin and methacrylic acid ester-based resin, the film constituting the surface layer can appropriately comprise other resins, plasticizers, heat stabilizers, antioxidants, light stabilizers, crystal nucleating agents, anti-blocking agents, sealability improvers, mold release agents, colorants, pigments, foaming agents, flame retardants, and the like, within a range that does not impair the object of the present invention. However, in general, the total amount of the vinylidene fluoride-based resin and methacrylic acid ester-based resin in the film constituting the surface layer is 80% by mass or more, typically 90% by mass or more, more typically 95% by mass or more, and can even be 100% by mass.

In a preferred embodiment, the film constituting the surface layer may comprise (A) one or two selected from a copolymer of vinylidene fluoride with hexafluoropropylene, and polyvinylidene fluoride (PVDF homopolymer), and (B) a methacrylic acid ester-based resin; wherein the total of (A) and (B) is 80% by mass or more, typically 90% by mass or more, more typically 95% by mass or more, and can even be 100% by mass.

Although an ultraviolet absorber may be added to the film constituting the surface layer, it is preferable not to add it from the viewpoint of cost and bleed-out.

The average thickness of the film constituting the surface layer is preferably 1 to 40 $\mu$m, more preferably 5 to 35 $\mu$m, even more preferably 8 to 30 $\mu$m, and particularly preferably 10 to 20 $\mu$m. When the average thickness of the film is 1 $\mu$m or more, film formability is improved and the protective function when used as the outermost layer can be improved, and when it is 40 $\mu$m or less, transparency can be improved and costs can be reduced. The film constituting the surface layer may be formed as a single layer or as a plurality of layers, but it is desirable that the total average thickness falls within the above-mentioned average thickness. The average thickness of the film can be calculated as the average value obtained by measuring the thickness at multiple locations by observing the cross-section of the film using a confocal laser microscope.

On the other hand, regarding the embodiments of the film constituting the back layer, the same description as in the film embodiment according to the first embodiment, including the composition, average particle diameter of crosslinked (meth)acrylic acid-based resin particles, average thickness, haze, clarity, and total light transmittance, is applied. Therefore, the description is omitted here.

From the viewpoint of increasing transparency, the haze of the film according to the second embodiment measured based on JIS K7136: 2000 is preferably 5% or less, more preferably 4% or less, and for example, it can be in the range of 1 to 5%.

In one embodiment, the film according to the second embodiment has a clarity (CLR), which has been explained for the film according to the first embodiment, of 97% or more, preferably 98% or more, more preferably 99% or more, and for example, it can be 97 to 99.5%.

From the viewpoint of increasing transparency, the 60° specular gloss on the outer surface side of the surface layer (the film containing vinylidene fluoride-based resin) of the film according to the second embodiment as measured based on JIS Z8741: 1997 is preferably 100 or more, more preferably 110 or more, even more preferably 120 or more, and can be, for example, 100 to 130.

A multilayer film in which a surface layer and a back layer are laminated can be manufactured, for example, by a melt coextrusion molding method in which a plurality of resins is adhesively laminated in a molten state using a plurality of extrusion molding machines. The melt coextrusion molding method includes a multi-manifold die method in which a plurality of resins is made into sheets and then each layer is bonded in contact at the tip inside a T-die; a feed block die method in which a plurality of resins is bonded together in a merging device (feedblock) and then spread into a sheet; and a dual slot die method in which a plurality of resins is molded into a sheet, and then each layer is contacted and bonded at the tip of the outside of a T-die. In addition, it can also be manufactured by an inflation molding method using a round die.

The film according to the second embodiment can be manufactured by, for example, performing the following steps.

Step 1: a step of melt-coextrusion molding a first resin composition and a second resin composition into a film from a T-die at a temperature of 200 to 260 °C, such that the average thickness of the first resin composition is 1 to 40 $\mu$m, and the average thickness of the second resin composition is 10 to 100 $\mu$m,

    wherein the first resin composition comprises vinylidene fluoride-based resin, and

    the second resin composition comprises a methacrylic acid ester-based resin, and 0.1 parts by mass or more and 2 parts by mass or less of crosslinked (meth)acrylic acid ester-based resin particles with respect to 100 parts by mass of the methacrylic acid ester-based resin.

Step 2: after extrusion from the exit of the T-die, a step of cooling at least one surface of the melt-coextrusion molded film on the first resin composition side by bringing it into contact with the surface of a metal roll whose temperature is controlled to 30 to 60 °C.

When manufacturing a film with a thickness of about 30 to 50 $\mu$m under the above conditions, it is appropriate to set the film transport speed to 5 to 9 m/min. Further, from the viewpoint of removing foreign matter, when a screen mesh is installed in the extruder, the opening of the mesh needs to be adjusted to a size that allows crosslinked (meth)acrylic acid ester-based resin particles to pass through.

Examples of methods for controlling the temperature on the surface of the metal roll include a method of circulating a cooling medium such as cooling water inside the metal roll.

During cooling, it is more preferred that a rubber touch roll is placed opposite the metal roll, and the laminate of the first resin composition and the second resin composition in a molten state extruded from the outlet of the T-die is pinched between the metal roll (cast roll) and the touch roll, from the viewpoint of transferring the smooth surface of the metal roll to the film. The surface temperature of the rubber touch roll is preferably 0 to 70 °C, more preferably 0 to 30 °C, from the viewpoint of suppressing transfer of the surface shape of the rubber roll.

From the viewpoint of reducing the surface roughness of the film, it is desirable that the surface roughness of the metal roll is small, and it is further desirable that the surface roughness of the touch roll is also small. Reducing the surface roughness of the film is advantageous in reducing the haze value and increasing the clarity of the film. This is because the surface roughness of the metal roll and touch roll reflects the surface roughness of the film. Therefore, the arithmetic mean roughness Ra on the surface of the metal roll measured based on JIS B0601: 2001 is preferably 100 nm or less, more preferably 80 nm or less, even more preferably 60 nm or less, even more preferably 40 nm or less, even more preferably 20 nm or less, and for example, it can be 10 to 100 nm. The arithmetic mean roughness Ra on the surface of the touch roll measured based on JIS B0601: 2001 is preferably 150 nm or less, more preferably 120 nm or less, and for example, it can be set to 100 to 150 nm.

(3. Film laminated on base material)

A base material may be laminated on each of the films according to the first embodiment and the second embodiment. Therefore, in one embodiment of the present invention, a film is provided in which a base material is laminated on either side of the film according to the first embodiment. In another embodiment, the present invention provides a film in which a base material is laminated on the surface layer and/or the back layer of the film according to the second embodiment. It is preferable that the average total thickness of the film on which the base material is laminated is 50 to 1000 μm, from the viewpoint of workability and cost of adhesion to automobile interior parts.

Examples of the base material include layers such as a decorative layer, a protective layer, an adhesive layer, a printed layer, and a metal vapor deposited layer. One type of base material may be used in a single layer, or two or more types may be used in combination and laminated.

As mentioned above, the films according to the first embodiment and the second embodiment can have high transparency. Therefore, by applying the film to the surface of a base material with high gloss, this property can be effectively utilized. Therefore, in a preferred embodiment, the 60° specular gloss measured based on JIS Z8741: 1997 on the surface of the base material to which the film is bonded is 100 to 600, typically 300 to 550, and L* at an acceptance angle of 15° in the L*a*b* color space based on JIS Z8781-4: 2013 on the surface is 0 to 20, typically 0 to 5.

In a preferred embodiment, a metallic decorative film in which the film according to the first embodiment is laminated as the outermost layer, or a metallic decorative film in which the film according to the second embodiment is laminated as the outermost layer with the surface layer (the film containing vinylidene fluoride-based resin) on the outside is provided.

In one embodiment, a metallic decorative film comprises the film according to the first embodiment, an anchor layer, a metal vapor deposited layer, and an adhesive layer in this order, and the film according to the first embodiment constitutes the outermost layer. In another embodiment, a metallic decorative film comprises the film according to the second embodiment, an anchor layer, a metal vapor deposited layer, and an adhesive layer in this order, and the film according to the second embodiment constitutes the outermost layer with the surface layer (the film containing vinylidene fluoride-based resin) on the outside.

The anchor layer may be, but is not limited to, acrylic resin, nitrocellulose-based resin, polyurethane-based resin (including those cured with polyol resin as the main resin and isocyanate-based resin as curing agent), acrylic urethane-based resins (including those cured with acrylic polyol resin as the main resin and isocyanate-based resin as a curing agent), polyester-based resin, styrene-maleic acid-based resin, chlorinated PP-based resin, and the like. Among these, it is preferable that the anchor layer contains an acrylic resin since the resulting film has better adhesion.

The metal vapor deposited layer can include a metal such as, but not limited to, indium. In addition, the metal vapor deposition layer may include various nonmetals, metals, metal oxides, and metal nitrides.

The adhesive layer can contain various adhesives, adhesives, pressure sensitive adhesives (PSA), and the like.

Examples of methods for laminating a base material on the films according to the first embodiment and the second embodiment include adhesive lamination and thermal lamination. Other known lamination methods may also be employed. Further, the films according to the first embodiment and the second embodiment can be subjected to heat forming. Examples of the heat forming method include a method in which a base material is bonded to one or both sides of the film, and then vacuum forming, pressure forming, or vacuum pressure forming is carried out.

Methods for coating a surface of articles such as automobile interior parts with decorative films, especially metallic decorative films include, for example, film insert molding, in-mold molding, and vacuum lamination molding (including vacuum / pressure molding such as TOM molding). Among these, compared to in-mold molding and vacuum lamination molding, film insert molding has the advantage that the decorative film can follow parts with more complex shapes, achieving good surface coverage, since the decorative film is heated and preformed.

**EXAMPLES**

Hereinafter, the present invention will be described in detail based on Examples and in comparison with Comparative Examples.

<1. Single layer film >

<Methacrylic acid ester-based resin>

The following materials were prepared as the methacrylic acid ester-based resin.

- "Hipet HBS000" manufactured by Mitsubishi Chemical Corporation (methacrylic acid ester-based resin with Tg of 97 °C containing rubber components of butyl acrylate (n-BA) and butyl methacrylate (BMA))

<Crosslinked (meth)acrylic acid ester-based resin particles>

The following materials were prepared as the crosslinked (meth)acrylic acid ester-based resin particles.

- "GM-0105" manufactured by Aica Kogyo Co., Ltd. (crosslinked methyl methacrylate-based resin particles) (average particle diameter = 2.5 $\mu$m)

- "MX-80H3wT" manufactured by Soken Kagaku Co., Ltd. (crosslinked methyl methacrylate-based resin particles) (average particle diameter = 0.81 $\mu$m)

- "MR-1HG" manufactured by Soken Kagaku Co., Ltd. (crosslinked methyl methacrylate-based resin particles) (average particle diameter = 1.2 $\mu$m)

- "GM-0449S-2" manufactured by Aica Kogyo Co., Ltd. (crosslinked methyl methacrylate-based resin particles) (average particle diameter = 3.7 $\mu$m)

- "GM-0806S" manufactured by Aica Kogyo Co., Ltd. (crosslinked methyl methacrylate-based resin particles) (average particle diameter = 8.2 $\mu$m)

In addition, since there was virtually no particle with a particle diameter of less than 0.2 $\mu$m in any of the above types of particles, it was possible to assume that the entire amount in the formulation constituted the crosslinked (meth)acrylic acid ester-based resin particles in the film.

The average particle diameter refers to the D50 value (volume basis) of the particle diameter distribution measured using the laser diffraction / scattering method. The D50 value is also referred to as the median diameter, and is the particle diameter at which the cumulative particle diameter distribution from the smaller particle diameter side is 50%. Examples of the measuring device include Mastersizer 2000 (manufactured by Malvern Panalytical).

<Ultraviolet absorber>

The following materials was prepared as the ultraviolet absorber.

- Triazine-based ultraviolet absorber "Tinuvin (registered trademark) 1600" manufactured by BASF

(1-2. Preparation of films)

According to the test numbers, each compound was obtained after kneading using a $\varphi$30 mm twin-screw extruder according to the formulation shown in Table 1. Each of the obtained compounds was melt-extrusion molded using a T-die single screw extruder with a diameter of 40 mm. While conveying at a transport speed of 4.5 m/min, the extruded film-like resin composition was cooled by sandwiching it between a metal roll (surface temperature: about 40 °C) through which cooling water was flowed and a rubber touch roll (surface temperature: about 20 °C), thereby obtaining a film having the average thickness shown in Table 1. Here, when the arithmetic mean roughness Ra of the surface of the metal roll was measured based on JIS B0601: 2001 using a contact type surface roughness meter (Mitutoyo Co., Ltd., SJ210), it was 0.013 $\mu$m. When the arithmetic mean roughness Ra of the surface of the touch roll was measured based on JIS B0601: 2001 using a contact type surface roughness meter (Mitutoyo Co., Ltd., SJ210), it was 0.116 $\mu$m.

<2. Multilayer film>

(2-1. Materials)

<<For surface layer (film containing vinylidene fluoride-based resin)>>

<Vinylidene fluoride-based resin>

The following material was prepared as the vinylidene fluoride-based resin (PVDF).

- "Kynar1000HD" manufactured by Arkema (PVDF homopolymer with a melting point of 168 °C)

<Methacrylic acid ester-based resin>

The following material was prepared as the methacrylic acid ester-based resins.

- "Sumipex MGSS" manufactured by Sumitomo Chemical Co., Ltd. (polymethyl methacrylate with a Tg of 101 °C)

<<For back layer (film containing methacrylic acid ester-based resin as the main component)>>

The same materials as the single layer film were prepared for the methacrylic acid ester-based resin, crosslinked (meth)acrylic acid-based resin particles, and ultraviolet absorber.

(2-2. Preparation of films)

According to the test numbers, each compound for the surface layer and for the back layer was obtained after kneading using a twin-screw extruder with a diameter of 30 mm according to the formulations listed in Table 2. The compound for the surface layer and the compound for the back layer were melt-coextrusion molded using two single-screw extruders with a diameter of 40 mm and a feed block type T-die multilayer extruder equipped with a feed block and a T-die at the tip. While conveying at a transport speed of 6.7 m/min, the extruded film-like resin composition was cooled by sandwiching it between a metal roll (surface temperature: about 20 °C) through which cooling water was flowed and a rubber touch roll (surface temperature: about 40 °C), thereby obtaining a laminated film having the average thickness shown in Table 2. Here, when the arithmetic mean roughness Ra of the surface of the metal roll was measured based on JIS B0601: 2001 using a contact type surface roughness meter (Mitutoyo Co., Ltd., SJ210), it was 0.013 $\mu$m. When the arithmetic mean roughness Ra of the surface of the touch roll was measured based on JIS B0601: 2001 using a contact type surface roughness meter (Mitutoyo Co., Ltd., SJ210), it was 0.116 $\mu$m.

<3. Film properties>

(3-1. Film average thickness)

For each film (widthwise length 800 mm) prepared under the above conditions, the cross-section of the film was observed at a magnification of 2000 times using a confocal laser microscope (manufactured by Keyence Corporation, VK-X100) and the thickness of the film (in the case of a multilayer film, the thickness of the surface layer and the back layer) was measured based on the distance between two points. Measurements were performed at any one location in the machine direction (MD) for 17 points at 50 mm intervals in the film transverse direction (TD), and the average value was taken as the measured value. The results are shown in Tables 1 and 2.

(3-2. Total light transmittance)

For each film produced prepared the above conditions, the total light transmittance at 25 °C was determined based on JIS K7361-1: 1997 using a haze meter NDH7000 (manufactured by Nippon Denshoku Industries Co., Ltd.). The results are shown in Tables 1 and 2.

(3-3. Haze)

For each film prepared under the above conditions, the haze value based on JIS K7136: 2000 at 25 °C was measured using a haze meter NDH7000 (manufactured by Nippon Denshoku Industries Co., Ltd.). The results are shown in Tables 1 and 2.

(3-4. Clarity)

For each film prepared under the above conditions, the clarity (CLR) was measured using a haze / transparency measuring device ("Haze-Gard i" manufactured by BYK Additives & Instruments) according to the measurement method described above. In addition, a CIE-D65 light source was used as the light source. The results are shown in Tables 1 and 2.

(3-5. 60° specular gloss)

For each film prepared under the above conditions, the 60° specular gloss of the outer surface side of the film containing vinylidene fluoride-based resin was measured based on JIS Z8741: 1997. The results are shown in Tables 1 and 2.

(3-6. Blocking resistance)

For each film prepared under the above conditions, 10 A4 size sample films were cut out. Ten sheets of the cut sample films were stacked with the same side facing up, a stainless-steel plate was placed on top of the stack, and a 1 kg weight was placed on top of the stainless-steel plate. In this state, it was left at a temperature of 50 °C for 24 hours. Thereafter, the weight was removed, and the edge of the topmost sample film was held with one hand and peeled off in a 90° direction. The blocking resistance was evaluated using the following criteria. The results are shown in Tables 1 and 2.

Double circle: The second and subsequent films from the top do not lift up and can be peeled off smoothly with one hand.

Circle: The second and subsequent films from the top can be peeled off without being lifted up, but there is a peeling sound.

Cross: The second and subsequent films from the top are lifted up.

(3-7. Chemical resistance)

Each film prepared under the above conditions was cut into 10 cm square pieces, 5 g of a chemical (sunscreen cream, product name: Neutrogena Ultra Sheer SPF45) was applied to one side of the film (if a film containing vinylidene fluoride-based resin was laminated, the side of the film containing vinylidene fluoride-based resin). After left at 55 °C for 4 hours, the chemical was wiped off and the appearance was checked. Evaluation was performed based on the following criteria. The results are shown in Tables 1 and 2.

Double circle: No change in appearance.

Circle: Slight wrinkles appeared.

Cross: The film became cloudy or significantly deformed.

<Discussion>

(1) Single layer film

In the films of Examples 1-1 to 1-4, both the composition of the resin constituting the film and the size of the crosslinked (meth)acrylic acid ester-based resin particles were appropriate, so they had high transparency (low haze, high clarity) and excellent blocking resistance were obtained.
The film of Comparative Example 1-1 had poor blocking resistance because it did not contain crosslinked (meth)acrylic acid ester-based resin particles.
The films of Comparative Examples 1-2 to 1-4 contained crosslinked (meth)acrylic acid ester-based resin particles, but their transparency was insufficient because the size of the particles was inappropriate.

(2) Multilayer film

In the films of Examples 2-1 to 2-13, both the composition of the resin constituting the film and the size of the crosslinked (meth)acrylic acid ester-based resin particles were appropriate, so they had high transparency and excellent blocking resistance was obtained. Furthermore, by laminating the film containing vinylidene fluoride-based resin, chemical resistance was improved compared to a single layer film.

The films of Comparative Examples 2-1 and 2-2 had poor blocking resistance because they did not contain crosslinked (meth)acrylic acid-based resin particles.

The films of Comparative Examples 2-3 to 2-4 contained crosslinked (meth)acrylic acid ester-based resin particles, but the content was inappropriate and the transparency was insufficient.

In the film of Comparative Example 2-5, the back layer (film containing methacrylic acid ester-based resin as the main component) was made of a vinylidene fluoride-based resin whose refractive index was significantly different from that of the crosslinked (meth)acrylic acid ester-based resin particles. As a result, transparency was insufficient.

The films of Comparative Examples 2-6 to 2-9 contained crosslinked (meth)acrylic acid ester-based resin particles, but their transparency was insufficient because the size of the particles was inappropriate.

Table 1-1

| Test No. | | | Example 1-1 | Example 1-2 | Example 1-3 | Example 1-4 |
|---|---|---|---|---|---|---|
| Film containing methacrylic acid ester-based resin as the main component | Formulation | Type of methacrylic acid ester-based resin | HBS000 | HBS000 | HBS000 | HBS000 |
| | | Formulation amount [parts by mass] | 100 | 100 | 100 | 100 |
| | | Type of vinylidene fluoride-based resin | - | - | - | - |
| | | Formulation amount [parts by mass] | - | - | - | - |
| | | Type of UV absorbers | Tinuvin 1600 | Tinuvin 1600 | Tinuvin 1600 | Tinuvin 1600 |
| | | Formulation amount [parts by mass] (external addition) | 2.1 | 2.1 | 2.1 | 2.1 |
| | | Type of crosslinked (meth)acrylic acid ester-based particles | GM-0105 | MX-80H3wT | MR-1HG | GM-0449S-2 |
| | | Average particle diameter of crosslinked (meth)acrylic acid ester-based particles [μm] | 2.5 | 0.81 | 1.2 | 3.7 |
| | | Formulation amount [parts by mass] (external addition) | 1 | 1 | 1 | 1 |
| | Average thickness [μm] | | 40 | 40 | 40 | 40 |
| | Ratio of average particle diameter of crosslinked particles to average thickness of film | | 6.3% | 2.0% | 3.0% | 9.3% |
| Film properties | Total light transmittance (%) | | 93 | 93 | 93 | 93 |
| | Haze (%) | | 3.8 | 3.5 | 3.3 | 4.2 |
| | Clarity (%) | | 97.1 | 99.2 | 98.9 | 97.1 |
| | 60° specular gloss | | - | - | - | - |
| | Blocking resistance | | ◎ | ○ | ◎ | ◎ |
| | Chemical resistance | | × | × | × | × |

EP 4 382 558 A1

Table 1-2 (Continuation of Table 1)

| | | Test No. | Comparative Example 1-1 | Comparative Example 1-2 | Comparative Example 1-3 | Comparative Example 1-4 |
|---|---|---|---|---|---|---|
| Film containing methacrylic acid ester-based resin as the main component | Formulation | Type of methacrylic acid ester-based resin | HBS000 | HBS000 | HBS000 | HBS000 |
| | | Formulation amount [parts by mass] | 100 | 100 | 100 | 100 |
| | | Type of vinylidene fluoride-based resin | - | - | - | - |
| | | Formulation amount [parts by mass] | - | - | - | - |
| | | Type of UV absorbers | Tinuvin 1600 | Tinuvin 1600 | Tinuvin 1600 | Tinuvin 1600 |
| | | Formulation amount [parts by mass] (external addition) | 2.1 | 2.1 | 2.1 | 2.1 |
| | | Type of crosslinked (meth)acrylic acid ester-based particles | - | GM-0105 | GM-0449S-2 | GM-0806S |
| | | Average particle diameter of crosslinked (meth)acrylic acid ester-based particles [μm] | - | 2.5 | 3.7 | 8.2 |
| | | Formulation amount [parts by mass] (external addition) | - | 1 | 1 | 1 |
| | Average thickness [μm] | | 40 | 14 | 27 | 40 |
| Ratio of average particle diameter of crosslinked particles to average thickness of film | | | - | 17.9% | 13.7% | 20.5% |
| Film properties | Total light transmittance (%) | | 93 | 93 | 93 | 93 |
| | Haze (%) | | 0.8 | 6.0 | 6.3 | 6.7 |
| | Clarity (%) | | 99.7 | 90.1 | 89.0 | 88.6 |
| | 60° specular gloss | | - | - | - | - |
| | Blocking resistance | | × | ◎ | ◎ | ◎ |
| | Chemical resistance | | × | × | × | × |

Table 2-1

| Test No. | | | | Example 2-1 | Example 2-2 | Example 2-3 | Example 2-4 |
|---|---|---|---|---|---|---|---|
| Film containing methacrylic acid ester-based resin as the main component | Formulation | | Type of methacrylic acid ester-based resin | HBS000 | HBS000 | HBS000 | HBS000 |
| | | | Formulation amount [parts by mass] | 100 | 100 | 100 | 100 |
| | | | Type of vinylidene fluoride-based resin | - | - | - | - |
| | | | Formulation amount [parts by mass] | - | - | - | - |
| | | | Type of UV absorbers | Tinuvin 1600 | Tinuvin 1600 | Tinuvin 1600 | Tinuvin 1600 |
| | | | Formulation amount [parts by mass] (external addition) | 2.1 | 2.1 | 2.1 | 2.1 |
| | | | Type of crosslinked (meth)acrylic acid ester-based particles | GM-0105 | GM-0105 | GM-0105 | MX-80H3wT |
| | | | Average particle diameter of crosslinked (meth)acrylic acid ester-based particles [μm] | 2.5 | 2.5 | 2.5 | 0.81 |
| | | | Formulation amount [parts by mass] (external addition) | 0.1 | 0.5 | 1 | 0.5 |
| | | Average thickness [μm] | | 27 | 27 | 27 | 27 |
| | Ratio of average particle diameter of crosslinked particles to average thickness of film | | | 9.3% | 9.3% | 9.3% | 3.0% |
| Film containing vinylidene fluoride-based resin | Formulation | | Type of vinylidene fluoride-based resin | Kynar1000HD | Kynar1000HD | Kynar1000HD | Kynar1000HD |
| | | | Formulation amount [parts by mass] | 70 | 70 | 70 | 70 |
| | | | Type of methacrylic acid ester-based resins | Sumipex MGSS | Sumipex MGSS | Sumipex MGSS | Sumipex MGSS |
| | | | Formulation amount [parts by mass] | 30 | 30 | 30 | 30 |
| | Average thickness [μm] | | | 13 | 13 | 13 | 13 |
| Film properties | Total light transmittance (%) | | | 93 | 93 | 93 | 93 |
| | Haze (%) | | | 1.5 | 2.7 | 4.8 | 2.0 |
| | Clarity (%) | | | 99.2 | 99.0 | 97.0 | 99.6 |
| | 60° specular gloss | | | 128 | 127 | 119 | 129 |
| | Blocking resistance | | | ◎ | ◎ | ◎ | ○ |
| | Chemical resistance | | | ◎ | ◎ | ◎ | ◎ |

Table 2-2 (Continuation of Table 2)

| | | Test No. | Example 2-5 | Example 2-6 | Example 2-7 | Example 2-8 |
|---|---|---|---|---|---|---|
| Film containing methacrylic acid ester-based resin as the main component | Formulation | Type of methacrylic acid ester-based resin | HBS000 | HBS000 | HBS000 | HBS000 |
| | | Formulation amount [parts by mass] | 100 | 100 | 100 | 100 |
| | | Type of vinylidene fluoride-based resin | - | - | - | - |
| | | Formulation amount [parts by mass] | - | - | - | - |
| | | Type of UV absorbers | Tinuvin 1600 | Tinuvin 1600 | Tinuvin 1600 | Tinuvin 1600 |
| | | Formulation amount [parts by mass] (external addition) | 2.1 | 2.1 | 2.1 | 2.1 |
| | | Type of crosslinked (meth)acrylic acid ester-based particles | MX-80H3wT | MX-80H3wT | MR-1HG | MR-1HG |
| | | Average particle diameter of crosslinked (meth)acrylic acid ester-based particles [μm] | 0.81 | 0.81 | 1.2 | 1.2 |
| | | Formulation amount [parts by mass] (external addition) | 1 | 2 | 0.5 | 1 |
| | | Average thickness [μm] | 27 | 27 | 27 | 27 |
| | | Ratio of average particle diameter of crosslinked particles to average thickness of film | 3.0% | 3.0% | 4.4% | 4.4% |
| Film containing vinylidene fluoride-based resin | Formulation | Type of vinylidene fluoride-based resin | Kynar1000HD | Kynar1000HD | Kynar1000HD | Kynar1000HD |
| | | Formulation amount [parts by mass] | 70 | 70 | 70 | 70 |
| | | Type of methacrylic acid ester-based resins | Sumipex MGSS | Sumipex MGSS | Sumipex MGSS | Sumipex MGSS |
| | | Formulation amount [parts by mass] | 30 | 30 | 30 | 30 |
| | | Average thickness [μm] | 13 | 13 | 13 | 13 |
| Film properties | | Total light transmittance (%) | 93 | 93 | 93 | 93 |
| | | Haze (%) | 3.0 | 4.2 | 2.5 | 3.8 |
| | | Clarity (%) | 99.4 | 98.9 | 99.2 | 98.8 |
| | | 60° specular gloss | 124 | 120 | 128 | 123 |
| | | Blocking resistance | ○ | ○ | ○ | ◎ |
| | | Chemical resistance | ◎ | ◎ | ◎ | ◎ |

Table 2-3 (Continuation of Table 2)

| Test No. | | | Example 2-9 | Example 2-10 | Example 2-11 | Example 2-12 |
|---|---|---|---|---|---|---|
| Film containing methacrylic acid ester-based resin as the main component | Formulation | Type of methacrylic acid ester-based resin | HBS000 | HBS000 | HBS000 | HBS000 |
| | | Formulation amount [parts by mass] | 100 | 100 | 100 | 100 |
| | | Type of vinylidene fluoride-based resin | - | - | - | - |
| | | Formulation amount [parts by mass] | - | - | - | - |
| | | Type of UV absorbers | Tinuvin 1600 | Tinuvin 1600 | Tinuvin 1600 | Tinuvin 1600 |
| | | Formulation amount [parts by mass] (external addition) | 2.1 | 2.1 | 2.1 | 2.1 |
| | | Type of crosslinked (meth)acrylic acid ester-based particles | MR-1HG | GM-0105 | GM-0105 | GM-0105 |
| | | Average particle diameter of crosslinked (meth)acrylic acid ester-based particles [μm] | 1.2 | 2.5 | 2.5 | 2.5 |
| | | Formulation amount [parts by mass] (external addition) | 2 | 0.5 | 1 | 0.5 |
| | Average thickness [μm] | | 27 | 27 | 27 | 27 |
| | Ratio of average particle diameter of crosslinked particles to average thickness of film | | 4.4% | 9.3% | 9.3% | 9.3% |
| Film containing vinylidene fluoride-based resin | Formulation | Type of vinylidene fluoride-based resin | Kynar1000HD | Kynar1000HD | Kynar1000HD | Kynar1000HD |
| | | Formulation amount [parts by mass] | 70 | 60 | 60 | 80 |
| | | Type of methacrylic acid ester-based resins | Sumipex MGSS | Sumipex MGSS | Sumipex MGSS | Sumipex MGSS |
| | | Formulation amount [parts by mass] | 30 | 40 | 40 | 20 |
| | Average thickness [μm] | | 13 | 13 | 13 | 13 |
| Film properties | Total light transmittance (%) | | 93 | 93 | 93 | 93 |
| | Haze (%) | | 4.8 | 2.5 | 4.8 | 2.8 |
| | Clarity (%) | | 98.3 | 99.0 | 97.1 | 98.8 |
| | 60° specular gloss | | 119 | 125 | 120 | 125 |
| | Blocking resistance | | ◎ | ◎ | ◎ | ◎ |
| | Chemical resistance | | ◎ | ○ | ○ | ◎ |

Table 2-4 (Continuation of Table 2)

| | | | Test No. | Example 2-13 | Comparative Example 2-1 | Comparative Example 2-2 | Comparative Example 2-3 |
|---|---|---|---|---|---|---|---|
| Film containing methacrylic acid ester-based resin as the main component | Formulation | | Type of methacrylic acid ester-based resin | HBS000 | HBS000 | HBS000 | HBS000 |
| | | | Formulation amount [parts by mass] | 100 | 80 | 100 | 100 |
| | | | Type of vinylidene fluoride-based resin | - | K720 | - | - |
| | | | Formulation amount [parts by mass] | - | 20 | - | - |
| | | | Type of UV absorbers | Tinuvin 1600 | Tinuvin 1600 | Tinuvin 1600 | Tinuvin 1600 |
| | | | Formulation amount [parts by mass] (external addition) | 2.1 | 2.1 | 2.1 | 2.1 |
| | | | Type of crosslinked (meth)acrylic acid ester-based particles | GM-0105 | - | - | GM-0105 |
| | | | Average particle diameter of crosslinked (meth)acrylic acid ester-based particles [μm] | 2.5 | - | - | 2.5 |
| | | | Formulation amount [parts by mass] (external addition) | 1 | - | - | 3 |
| | | | Average thickness [μm] | 27 | 27 | 27 | 27 |
| | | | Ratio of average particle diameter of crosslinked particles to average thickness of film | 9.3% | - | - | 9.3% |
| Film containing vinylidene fluoride-based resin | Formulation | | Type of vinylidene fluoride-based resin | Kynar1000HD | Kynar1000HD | Kynar1000HD | Kynar1000HD |
| | | | Formulation amount [parts by mass] | 80 | 70 | 70 | 70 |
| | | | Type of methacrylic acid ester-based resins | Sumipex MGSS | Sumipex MGSS | Sumipex MGSS | Sumipex MGSS |
| | | | Formulation amount [parts by mass] | 20 | 30 | 30 | 30 |
| | | | Average thickness [μm] | 13 | 13 | 13 | 13 |
| Film properties | | | Total light transmittance (%) | 93 | 93 | 93 | 93 |
| | | | Haze (%) | 5.0 | 1.8 | 1.4 | 11.4 |
| | | | Clarity (%) | 97.0 | 99.4 | 99.7 | 91.8 |
| | | | 60° specular gloss | 119 | 124 | 115 | 96 |
| | | | Blocking resistance | ◎ | × | × | ◎ |
| | | | Chemical resistance | ◎ | ◎ | ◎ | ◎ |

Table 2-5 (Continuation of Table 2)

| | | Test No. | Comparative Example 2-4 | Comparative Example 2-5 | Comparative Example 2-6 | Comparative Example 2-7 |
|---|---|---|---|---|---|---|
| Film containing methacrylic acid ester-based resin as the main component | Formulation | Type of methacrylic acid ester-based resin | HBS000 | HBS000 | HBS000 | HBS000 |
| | | Formulation amount [parts by mass] | 100 | 80 | 100 | 100 |
| | | Type of vinylidene fluoride-based resin | - | K720 | - | - |
| | | Formulation amount [parts by mass] | - | 20 | - | - |
| | | Type of UV absorbers | Tinuvin 1600 | Tinuvin 1600 | Tinuvin 1600 | Tinuvin 1600 |
| | | Formulation amount [parts by mass] (external addition) | 2.1 | 2.1 | 2.1 | 2.1 |
| | | Type of crosslinked (meth)acrylic acid ester-based particles | GM-0449S-2 | GM-0105 | GM-0449S-2 | GM-0449S-2 |
| | | Average particle diameter of crosslinked (meth)acrylic acid ester-based particles [μm] | 3.7 | 2.5 | 3.7 | 3.7 |
| | | Formulation amount [parts by mass] (external addition) | 3 | 1 | 0.5 | 1 |
| | | Average thickness [μm] | 27 | 27 | 27 | 27 |
| | | Ratio of average particle diameter of crosslinked particles to average thickness of film | 13.7% | 9.3% | 13.7% | 13.7% |
| Film containing vinylidene fluoride-based resin | Formulation | Type of vinylidene fluoride-based resin | Kynar1000HD | Kynar1000HD | Kynar1000HD | Kynar1000HD |
| | | Formulation amount [parts by mass] | 70 | 70 | 70 | 70 |
| | | Type of methacrylic acid ester-based resins | Sumipex MGSS | Sumipex MGSS | Sumipex MGSS | Sumipex MGSS |
| | | Formulation amount [parts by mass] | 30 | 30 | 30 | 30 |
| | | Average thickness [μm] | 13 | 13 | 13 | 13 |
| Film properties | | Total light transmittance (%) | 92 | 93 | 93 | 93 |
| | | Haze (%) | 12.9 | 5.8 | 2.6 | 4.4 |
| | | Clarity (%) | 78.2 | 95.5 | 96.6 | 93.4 |
| | | 60° specular gloss | 94 | 119 | 128 | 113 |
| | | Blocking resistance | ◎ | ◎ | ◎ | ◎ |
| | | Chemical resistance | ◎ | ◎ | ◎ | ◎ |

EP 4 382 558 A1

Description of Reference Numerals

1 Film
10 Surface layer
20 Back layer

Table 2-6 (Continuation of Table 2)

| Test No. | | | Comparative Example 2-8 | Comparative Example 2-9 |
|---|---|---|---|---|
| Film containing methacrylic acid ester-based resin as the main component | Formulation | Type of methacrylic acid ester-based resin | HBS000 | HBS000 |
| | | Formulation amount [parts by mass] | 100 | 100 |
| | | Type of vinylidene fluoride-based resin | - | - |
| | | Formulation amount [parts by mass] | - | - |
| | | Type of UV absorbers | Tinuvin 1600 | Tinuvin 1600 |
| | | Formulation amount [parts by mass] (external addition) | 2.1 | 2.1 |
| | | Type of crosslinked (meth)acrylic acid ester-based particles | GM-0806S | GM-0806S |
| | | Average particle diameter of crosslinked (meth)acrylic acid ester-based particles [µm] | 8.2 | 8.2 |
| | | Formulation amount [parts by mass] (external addition) | 0.5 | 1 |
| | Average thickness [µm] | | 27 | 27 |
| | Ratio of average particle diameter of crosslinked particles to average thickness of film | | 30.4% | 30.4% |
| Film containing vinylidene fluoride-based resin | Formulation | Type of vinylidene fluoride-based resin | Kynar1000HD | Kynar1000HD |
| | | Formulation amount [parts by mass] | 70 | 70 |
| | | Type of methacrylic acid ester-based resins | Sumipex MGSS | Sumipex MGSS |
| | | Formulation amount [parts by mass] | 30 | 30 |
| | Average thickness [µm] | | 13 | 13 |
| Film properties | Total light transmittance (%) | | 93 | 93 |
| | Haze (%) | | 3.7 | 6.5 |
| | Clarity (%) | | 91.4 | 82.7 |
| | 60° specular gloss | | 116 | 114 |
| | Blocking resistance | | ◎ | ◎ |
| | Chemical resistance | | ◎ | ◎ |

21

**Claims**

1. A film, comprising crosslinked (meth)acrylic acid ester-based resin particles and comprising methacrylic acid ester-based resin as a main component,

   wherein the crosslinked (meth)acrylic acid-based resin particles have an average particle diameter of 1% or more and 10% or less with respect to an average thickness of the film,
   wherein the film does not comprise vinylidene fluoride-based resin,
   wherein a haze of the film measured based on JIS K7136: 2000 is 5% or less, and
   wherein a clarity (CLR) of the film calculated from the following formula is 97% or more,

$$CLR = 100 \times (Ic - Ir) / (Ic + Ir)$$

   in which, Ic represents an amount of light that travels straight with respect to an optical axis of parallel light that is incident perpendicularly to a surface of the film, out of the light that passes through the film, and Ir represents an amount of narrow-angle scattered light whose angle with respect to the optical axis of parallel light is within ±2.5°.

2. The film according to claim 1, wherein an amount of the crosslinked (meth)acrylic acid ester-based resin particles is 0.1 parts by mass or more and 2 parts by mass or less with respect to 100 parts by mass of the methacrylic acid ester-based resin.

3. A multilayer film, comprising:

   the film according to claim 1 or 2, and
   a film comprising vinylidene fluoride-based resin laminated on one side of the film;
   wherein a haze measured based on JIS K7136: 2000 is 5% or less, a clarity (CLR) is 97% or more, and a 60° specular gloss measured based on JIS Z8741: 1997 of an outer surface side of the film comprising vinylidene fluoride-based resin is 100 or more.

4. The multilayer film according to claim 3, wherein the film comprising the vinylidene fluoride-based resin comprises:

   (A) one or two selected from a copolymer of vinylidene fluoride with hexafluoropropylene, and polyvinylidene fluoride, and
   (B) a methacrylic acid ester-based resin;

   wherein a total of (A) is 50 parts by mass or more and 80 parts by mass or less, and (B) is 20 parts by mass or more and 50 parts by mass or less, with respect to 100 parts by mass of a total of (A) and (B).

5. A metallic decorative film, in which the film according to claim 1 or 2 is laminated as an outermost layer, or a metallic decorative film, in which the multilayer film according to claim 3 or 4 is laminated as an outermost layer with the film containing vinylidene fluoride-based resin on an outside.

1

10

20

FIG. 1

## INTERNATIONAL SEARCH REPORT

| International application No. |
|---|
| **PCT/JP2022/028095** |

### A. CLASSIFICATION OF SUBJECT MATTER

*C08J 5/18*(2006.01)i; *B32B 27/00*(2006.01)i; *B32B 27/30*(2006.01)i
FI: C08J5/18 CEY; B32B27/00 E; B32B27/30 A; B32B27/30 D

According to International Patent Classification (IPC) or to both national classification and IPC

### B. FIELDS SEARCHED

Minimum documentation searched (classification system followed by classification symbols)

C08J5/00-5/02; C08J5/12-5/22; B32B1/00-43/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2010-275434 A (NIPPON SHOKUBAI CO., LTD.) 09 December 2010 (2010-12-09) claims, paragraphs [0060], [0098], [0099] | 1-2 |
| Y | | 3-5 |
| Y | JP 2002-019051 A (KUREHA CHEMICAL INDUSTRY CO., LTD.) 22 January 2002 (2002-01-22) claims, paragraphs [0009], [0014] | 3-5 |
| Y | JP 2016-044300 A (MITSUBISHI RAYON CO., LTD.) 04 April 2016 (2016-04-04) claims, paragraphs [0024], [0025], examples | 3-5 |
| Y | WO 2015/137309 A1 (MITSUBISHI RAYON CO., LTD.) 17 September 2015 (2015-09-17) paragraphs [0112], [0113], [0119]-[0125] | 5 |

☐ Further documents are listed in the continuation of Box C.    ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 September 2022** | **20 September 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/028095**

| Patent document cited in search report | | | Publication date (day/month/year) | Patent family member(s) | Publication date (day/month/year) |
|---|---|---|---|---|---|
| JP | 2010-275434 | A | 09 December 2010 | (Family: none) | |
| JP | 2002-019051 | A | 22 January 2002 | (Family: none) | |
| JP | 2016-044300 | A | 04 April 2016 | (Family: none) | |
| WO | 2015/137309 | A1 | 17 September 2015 | US 2017/0022334 A1 paragraphs [0130], [0131], [0139]-[0146] EP 3135725 A1 KR 10-2016-0125447 A CN 106103584 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011142453 A

- JP 2012187934 A